# EUROPEAN PATENT APPLICATION

(11) **EP 1 803 586 A1**
(43) Date of publication of application: **04.07.2007**
(21) Application number: 06125917.2
(22) Date of filing: 12.12.2006
(51) Int. Cl.: B60C 1/00, C08K 3/04, C08K 3/36, C08L 21/00

(54) **Pneumatic tire**

(30) Priority: 22.12.2005 US 753133 P
(71) Applicant: THE GOODYEAR TIRE & RUBBER COMPANY, Akron, Ohio 44316-0001 (US)
(72) Inventor: Zanzig, David John, L-8064, Bertrange (LU); Puhala, Aaron Scott, Kent, OH 44240 (US); Sandstrom, Paul Harry, Cuyahoga Falls, OH 44223 (US); Ryba, Jennifer Lyn, Wadsworth, OH 44281 (US); Holden, Brian David, Kent, OH 44240 (US); Crawford, Michael Julian, Akron, OH 44303 (US)
(74) Representative: Kutsch, Bernd

(57) **Abstract**

This invention relates to a pneumatic rubber tire having a tread of a cap/base layered construction wherein said tire contains a first component as a tread cap layer having a running surface and at least two additional tire rubber components, wherein said tire components comprise rubber compositions which contain a maximum of 50 phr of reinforcing filler comprising a maximum of 30 phr of rubber reinforcing carbon black. In one aspect, a purpose of such maximum of 30 phr of rubber reinforcing carbon black for said plurality of tire components is to promote a relatively low hysteresis property within said tire via such components to thereby promote relatively low rolling resistance for a pneumatic tire which contains such components. In practice, such additional tire components may be, for example, outer sidewall rubber layer, apex, chafer, belt ply and carcass ply components.

## Description

### Field of the Invention

This invention relates to a pneumatic rubber tire having a tread of a cap/base layered construction wherein said tire contains a first component as a tread cap layer having a running surface and at least two additional tire rubber components, wherein said tire components comprise rubber compositions which contain a maximum of 50 phr of reinforcing filler comprising a maximum of 30 phr of rubber reinforcing carbon black. In one aspect, a purpose of such maximum of 30 phr of rubber reinforcing carbon black for said plurality of tire components is to promote a relatively low hysteresis property within said tire via such components to thereby promote relatively low rolling resistance for a pneumatic tire which contains such components. In practice, such additional tire components may be, for example, outer sidewall rubber layer, apex, chafer, belt ply and carcass ply components.

### Background of the Invention

It is often desired to provide a tire with a relatively low rolling resistance to promote fuel economy for an associated vehicle.

Historically, a pneumatic tire is composed of a plurality of rubber components which can negatively and collectively contribute to the tire's rolling resistance. For this invention, it is desired to promote a reduction in a tire's rolling resistance by limiting a reinforcing carbon black content for its tread cap layer and at least two additional tire components.

In practice, it is believed to be well known that a tire's tread component, particularly its outer tread cap layer which contains the tire's running surface, is a major contributor to a pneumatic tire's rolling resistance. However, it is believed to be further well known that other tire components also contribute to a pneumatic tire's rolling resistance, although, in general, to a lesser degree. Therefor, for this invention, serious consideration in reducing rolling resistance of a pneumatic tire is undertaken in a sense of taking into consideration a plurality of tire components in addition to its outer tread cap layer component.

Where is it desired to reduce the rolling resistance of a tire, its tread rubber composition is normally addressed to reduce its hysteresis in a sense of increasing the rebound physical property of its rubber composition, for such purpose.

However, as discussed, other significant tire components also typically contribute negatively to a tire's rolling resistance, although to a lesser degree than the tire tread. For example, a tire sidewall component also typically negatively contributes to a tire's rolling resistance, although to a lesser degree than the tire tread.

However, it is desired herein to address a plurality of tire components, in addition to a tire's outer tread layer, to reduce the hysteresis of their respective rubber compositions in a sense of increasing their individual physical rebound properties, in order to collectively and cooperatively promote a reduction in rolling resistance of the respective tire itself. For such purpose such tire components are comprised of rubber compositions which contain a maximum of 50 phr of rubber reinforcing filler which is inclusive of a maximum of 30 phr of rubber reinforcing carbon black.

In practice, such reduction in hysteresis of a rubber composition for a tire component is considered herein to be evidenced by an increase in its rebound property (e.g. 100°C rebound property) and might also be indicated by a decrease in its tan delta (e.g. 100°C) physical property.

For such purpose, it is desired herein that such plurality of tire components be of rubber compositions which individually have a maximum rebound value (100°C) of 85 and a minimum rebound value (100°C) of 65, therefore a rebound value (100°C) within a range of from 65 to 85. Such rebound value may be referred to as a Zwick rebound value as would be understood by those having skill in its use.

For such purpose, it may also be desired that such plurality of tire components be of rubber compositions which also individually have a minimum tan delta value (100°C, 10 percent strain, 11 Hertz) of 0.03 and a maximum tan delta value (100°C, 10 percent strain, 11 Hertz) of 0.10, therefor a tan delta (100°C, 10 percent strain, 11 Hertz) within a range of from 0.03 to 0.10 with an RPA 2000™ instrument from Alpha Technologies as would be understood by those having skill in such art. Such tan delta property may simply be referred to herein as "tan delta (100°C)".

In particular, a highly hysteretic cured rubber composition tends to generate internal heat during dynamic use which is accompanied by a relatively high rate of internal temperature increase for the rubber composition. A highly hysteretic cured rubber composition is typically evidenced by having a relatively low rebound and a relatively high tan delta physical property and it absorbs dynamic energy during use to a significantly greater extent than a lower hysteretic rubber composition having a higher rebound value and lower tan delta property,

The higher rate of internally generated internal temperature increase in a tire component composed of a higher hysteretic rubber promotes a hotter running tire, contributes more significantly in a negative manner to a tire component's rolling resistance and thereby promotes a reduced fuel economy for an associated vehicle. Therefore, as hereinbefore discussed, a physical property which is an indication of a relative hysteresis of a cured rubber composition is its rebound value which may be determined at, for example, 23°C or 100°C, preferably at 100°C which is closer to the running temperature of the tire, and is a physical property well known to those having skill in such art. A higher hysteresis rubber composition typically exhibits a lower rebound property. A higher rebound value of a cured rubber composition (where the rubber composition sample "bounces" higher and therefore does not absorb as much energy) is indicative of a more desirable lower hysteresis property where a reduction in rolling resistance of a pneumatic tire is desired, a phenomenon understood by one having skill in such art.

In practice, tire components which significantly affect the tire's rolling resistance are considered herein to typically include the aforesaid tread outer rubber cap layer of a tire tread of a cap/base, the outer visible rubber sidewall layer, internal tire components such as an apex positioned next to a tire bead component, tire chafer, internal cord reinforced rubber carcass ply(ies) and internal cord reinforced circumferential rubber belt underlying said tire tread, all of which are tire components well known to one having skill in such art.

In practice, the hysteresis of a rubber composition can be usually be reduced (e.g. an increase in its rebound property), for example, by reducing its rubber reinforcement particulate filler content (e.g. reducing its rubber reinforcing carbon black content) and/or modifying the choice of the rubber reinforcing carbon black itself since some rubber reinforcing carbon blacks have higher or lower structures and thus a greater or lesser tendency to increase or decrease a rubber composition's rebound property. Also, the use of precipitated silica reinforcing filler in place of rubber reinforcing carbon black can further reduce hysteresis of the rubber composition. Such ability to reduce the hysteresis (increase the rebound property) of a rubber composition for a tire component is well known to those having skill in such art.

Historically, tires have been suggested which contain sidewalls of a reduced carbon black content together with a tread which also contains a reduced carbon black content. For example, see US-A- 2005/0103412 and US -A- 2005/0087275.

However, it is considered herein to be a departure from past practice to provide a reduced reinforcing filler content in combination in the sense of a reduced reinforcing carbon black content for a combination of an outer tread cap layer plus at least two additional tire components in a sense of providing rubber compositions which contain a maximum of 50 phr of reinforcing filler comprised of a maximum of 30 phr of rubber reinforcing carbon black (e.g. from zero to 30 phr) with the remainder, if any, being silica, preferably precipitated silica, or, alternatively, with the majority, or even all, of the reinforcing filler being precipitated silica.

In the description of this invention, the term "phr" relates to parts by weight of an ingredient per 100 parts by weight of rubber, unless otherwise indicated.

The terms "rubber" and "elastomer" are used interchangeably unless otherwise indicated. The terms "vulcanized" and "cured" are used interchangeably unless otherwise indicated. The terms "compound" and "rubber composition" may be used interchangeably unless indicated. The term "carbon black" is used to refer to rubber reinforcing carbon blacks unless otherwise indicated. Exemplary rubber reinforcing carbon blacks may be referred to, for example, in the Vanderbilt Rubber Handbook (1987) on Pages 414 through 417.

### Disclosure and Practice of the Invention

In accordance with this invention, a pneumatic rubber tire, e.g. a tire having an open torroidal shape, is disclosed comprising a plurality of tire components, said tire comprising:
(A) circumferential rubber tread component of a cap/base layered construction comprising:
   (1) an outer tread cap rubber layer component having a tread running surface, and
   (2) an underlying tread base rubber layer component (underlying said tread cap rubber layer),
(B) a circumferential belt ply layer component comprising a ply rubber composition containing a plurality of reinforcing steel cords embedded therein, said belt ply layer underlying said tread base rubber layer, and said ply rubber composition being referred to herein as a belt ply rubber composition;
(C) an outer (e.g. visible) sidewall rubber layer component extending from said tire tread component to a bead portion of said tire (said bead portion adapted to fit a rigid wheel rim for the tire as is well known to those having skill in such art), wherein said outer sidewall layer component is exclusive of cord reinforcement;
(D) an apex;
(E) a chafer rubber component positioned adjacent to said tire bead portion, wherein said chafer rubber component optionally contains cord reinforcement (said chafer rubber component provides an interface between said bead portion and a rigid wheel rim as is well known to those having skill in such art);
(F) at least one rubber carcass ply tire component comprised of a plurality of cords composed of at least one filament contained in a rubber composition (said rubber composition sometimes referred as carcass ply rubber composition and wherein said rubber carcass ply component typically extends from bead-to-bead through the crown portion of the tire as would be understood by those having skill in such art);
   wherein:
   (1) said outer tread cap rubber layer and
   (2) at least two, preferably at least three, of said additional tirecomponents comprise rubber compositions which contain from 20 to a maximum of 50 phr of rubber reinforcing filler comprised of from zero to a maximum of 30 phr of rubber reinforcing carbon black and from zero to a maximum of 50 phr of silica, preferably precipitated silica or synthetic amorphous silica which contains hydroxyl groups on its surface.

In practice, the rubber compositions of said tread cap component and said additional tire components may contain reinforcing filler in a range of from 20 to 50, alternately from 25 to 45, phr with a rubber reinforcing carbon black content in a range of from zero to 30, alternately 5 to 25, phr and precipitated silica in a range of from zero to 50 phr and alternately in a range of from 10 to 40 phr. The precipitated silica is desirably provided in combination with a coupling agent for the silica to enhance its reinforcing effect for the elastomer(s), a feature well known to those having skill in such art.

In one aspect, the said reinforcing filler may be said precipitated silica (with a minimal, if any carbon black and therefore substantially free of rubber reinforcing carbon black) with a view toward promoting a maximization, or optimization of said hysteresis reduction.

In a further aspect, said additional tire components may comprise three, four, five, or six of said additional components.

Therefore, for example, said additional tire components may be at least three of said components wherein said reinforcing filler is precipitated silica.

In another aspect of the invention, the said pneumatic tire contains a tire innerliner component comprising a nanocomposite composition comprising a butyl-based rubber (copolymer of isobutylene and conjugated diene such as isoprene in an amount of from 0.5 to 5 weight percent units derived from said conjugated diene which may optionally be a halogenated butyl rubber such as for example bromobutyl and/or chlorobutyl rubber) and a dispersion therein of exfoliated clay platelets.

Preferably, as hereinbefore discussed, the rubber compositions of said tire components having from zero to a maximum of 30 phr of rubber reinforcing carbon black have a rebound (100°C) value of a minimum of 65 and preferably within a range of from 65 to 85.

Preferably, as hereinbefore discussed, the rubber compositions of said tire components having from zero to a maximum of 30 phr of rubber reinforcing carbon black have a tan delta (100°C) value of a maximum of 0.1 and within a range of 0.03 to 0.1.

In one aspect of the invention, said additional tire components with rubber compositions containing from zero to a maximum of 30 phr of rubber reinforcing carbon black are said belt ply and said carcass ply components

In another aspect of the invention said additional tire components comprised of rubber compositions containing from zero to a maximum of 30 phr of rubber reinforcing carbon black are said belt ply and said outer sidewall layer components.

In an additional aspect of the invention said additional tire components comprised of rubber compositions containing from zero to a maximum of 30 phr of rubber reinforcing carbon black are said carcass ply and said outer sidewall layer components.

In a further aspect of the invention, said additional tire components comprised of rubber compositions containing from zero to a maximum of 30 phr of rubber reinforcing carbon black are said outer sidewall layer and said tire apex components.

In another aspect of this invention, said additional tire components comprised of rubber compositions containing a maximum of 30 phr of rubber reinforcing carbon black are said tire apex and said chafer components.

In another aspect of the invention said additional tire components comprised of rubber compositions containing from zero to a maximum of 30 phr of rubber reinforcing carbon black are said belt ply, said carcass ply and said outer sidewall layer components.

In an additional aspect of the invention said additional tire components comprised of rubber compositions containing from zero to a maximum of 30 phr of rubber reinforcing carbon black are said carcass ply, said apex and said outer sidewall layer components.

In a further aspect of the invention, said additional tire components comprised of rubber compositions containing from zero to a maximum of 30 phr of rubber reinforcing carbon black are said outer sidewall layer, said apex and said chafer components.

In another aspect of this invention, said additional tire components comprised of rubber compositions containing from zero to a maximum of 30 phr of rubber reinforcing carbon black are said carcass ply, said belt ply, said outer sidewall layer, said apex and said chafer components.

Carbon black properties such as DBP values and nitrogen surface area (NSA) values are well known to those having skill in such art.

For example, the DBP (dibutylphthalate) value for carbon black is normally considered to be a measure of its structure, or aggregate size and is expressed in cubic centimeters per 100 grams of carbon black. A higher DBP adsorption number indicative of larger aggregates which, in turn, is indicative of higher structure for the carbon black.

For example, the nitrogen surface area (NSA) values and iodine values for carbon black are normally considered to be a measure of its surface area and is expressed in units of square meters/gram (m²/g). A higher NSA value is indicative of smaller particle size which, in turn, is indicative of higher surface area for the carbon black and typically a higher reinforcing carbon black for elastomers.

Representative examples of rubber reinforcing carbon blacks, as represented in The Vanderbilt Rubber Handbook, 1978, Page 417, are, for example, according to their ASTM designations.

In practice, the aforesaid rubber reinforcing carbon blacks typically used for tire sidewall rubber compositions as earlier described, and therefore the said outer rubber sidewall layer of this invention, are usually of a somewhat larger particle size than carbon blacks conventionally used for tire tread rubber cap layer compositions. Such carbon blacks for reinforcing tire sidewall rubber compositions are, for example, those with ASTM designations of N550, N326 and N330. Rubber compositions containing these types of carcass grade rubber reinforcing carbon blacks typically require a content of at least 50 phr of the carbon black in the respective rubber composition to be suitably electrically conductive.

In practice, such rubber reinforcing carbon black for said outer tread cap rubber layer component and said at least two additional tire components desirably have a dibutyl phthalate (DBP) value (ASTM D2414) in a range of from about 50 to about 200 cc/100g and an Iodine value (ASTM D1510) in a range of from about 30 to about 150 ml/100g.

In practice, where said outer, visible sidewall rubber layer component contains from zero to a maximum of 30 phr of rubber reinforcing carbon black and thereby having a relatively low electrical conductivity (a relatively high electrical resistivity), said outer sidewall rubber layer optionally contains at least one rubber strip extending across the radial width of said outer sidewall rubber layer, wherein said rubber strip has a relatively high electrical conductivity (relative to said outer sidewall rubber layer), wherein said rubber strip is exclusive of the outer, visible surface of said sidewall rubber layer, wherein rubber strip provides a path of least electrical resistance across the radial width of said sidewall rubber layer and wherein the rubber composition of said rubber strip contains a minimum of 50 phr of rubber reinforcing carbon black (and is thereby considered herein as being relatively electrically conductive).

In practice the tire components which contain from zero to a maximum of 30 phr of rubber reinforcing carbon black are considered herein as being relatively electrically nonconductive, or at least less electrically conductive, as compared to the aforesaid tire components which contain a minimum of 50 phr of rubber reinforcing filler.

If desired, a path of least electrical resistance may be provided through or around at least one of said outer tread cap rubber layer and said at least two tire components of rubber composition(s) which contain from zero to the maximum of 30 phr of rubber reinforcing carbon black by a rubber composition which contains at least 50 phr of rubber reinforcing carbon black, in order to provide said path of least electrical resistance through or around said tire component to a running surface of the tire tread cap layer. For example, see US-A- 2005/0103412 and US-A- 2005/0087275.

In practice, the rubber compositions of said outer tread cap rubber layer and said at least two additional tire components comprise diene-based elastomers (rubbers). Representative of said diene-based elastomers are polymers and copolymers of at least one of isoprene and 1,3-butadiene and copolymers of styrene and at least one of isoprene and 1,3-butadiene, preferably so long as said rebound and tan delta property parameters are preferably met for the rubber composition. Representative of such diene-based elastomers are, for example, cis 1,4-polyisoprene, cis 1,4-polybutadiene, styrene/butadiene copolymers, isoprene/butadiene copolymers, high vinyl polybutadiene having a vinyl 1,2-content in a range of from about 30 to about 90 percent and styrene/isoprene/butadiene terpolymers and blends thereof.

Such elastomers are generally blended with various compounding ingredients such as, for example, reinforcing fillers as hereinbefore discussed, zinc oxide, stearic acid, sulfur, accelerators, antioxidants, antiozonants and the like in conventional amounts, preferably so long as said rebound and tan delta physical property parameters are preferably met.

Various coupling agents may be used in combination and together with the precipitated silica. If desired, such coupling agent may be free of, and therefore exclusive of, a carbon black carrier, preferably so long as said rebound and tan delta physical property parameters are preferably met for the rubber composition.

For example, a suitable coupling agent may be a bis(3-trialkoxysilylalkyl) polysulfide having an average of from 2 to 4 sulfur atoms, alternately from 2 to 2.6 or an average of from 3.2 to 3.8, sulfur atoms, in its polysulfidic bridge, exemplary of which is a bis(3-triethoxysilylpropyl) polysulfide. Other coupling agents may be, for example, organoalkoxymertaptosilanes such as for example, mercaptopropyltrimethoxysilane, and mercaptopropyltriethoxysilane in which the mercapto moiety is blocked until after it is mixed with the rubber composition, preferably so long as the rebound and tan delta physical property parameters are preferably met for the rubber composition.

An example of a coupling agent is, for example, a liquid, carbon black-free, Si266™ from Degussa as bis-(3-triethoxysilylpropyl) polysulfide having an average of about 2.2 connecting sulfur atoms in its polysulfidic bridge.

## Claims

1. A pneumatic rubber tire comprising a plurality of tire components, the tire comprising:
(A) a circumferential rubber tread component of a cap/base layered construction comprising:
(1) an outer tread cap rubber layer component having a tread running surface, and
(2) a tread base rubber layer component underlying said tread cap rubber layer,
(B) a circumferential belt ply layer component comprising a ply rubber composition containing a plurality of reinforcing steel cords embedded therein, said belt ply layer underlying said tread base rubber layer, and said ply rubber composition being referred to herein as a belt ply rubber composition;
(C) an outer sidewall rubber layer component extending from said tire tread component to a bead portion of said tire, wherein said outer sidewall layer component is exclusive of cord reinforcement;
(D) an apex;
(E) a chafer rubber component positioned adjacent to said tire bead portion, wherein said chafer rubber component optionally contains cord reinforcement;
(F) at least one rubber carcass ply tire component comprising a plurality of cords composed of at least one filament contained in a rubber composition;
wherein:
(1) said outer tread cap rubber layer and
(2) at least two, preferably at least three, of said additional tire components comprise rubber compositions which contain from 20 to a maximum of 50 phr of rubber reinforcing filler comprising from zero to a maximum of 30 phr of rubber reinforcing carbon black and from zero to a maximum of 50 phr of silica, preferably precipitated silica or synthetic amorphous silica which contains hydroxyl groups on its surface.

2. The tire of claim 1 wherein the rubber compositions of said outer tread cap rubber layer component and said at least two additional tire components contain reinforcing filler in a range of from 25 to 45 phr with a rubber reinforcing carbon black content in a range of from 5 to 25 phr and precipitated silica or precipitated silica in a range of from 10 to 40 phr.

3. The tire of claim 1 or 2, wherein said pneumatic tire contains a tire innerliner component comprising a nanocomposite composition comprising a butyl-based rubber and a dispersion therein of exfoliated clay platelets.

4. The tire of at least one of the previous claims, wherein the rubber compositions of said outer tread rubber cap layer and said at least two additional components having from zero to a maximum of 30 phr of rubber reinforcing carbon black have a rebound (100°C) value of a minimum of 65 and preferably within a range of from 65 to 85 and/or a tan delta (100°C) value of a maximum of 0.1 and preferably within a range of 0.03 to 0.1.

5. The tire of at least one of the previous claims, wherein said additional tire components comprising rubber compositions containing from zero to a maximum of 30 phr of rubber reinforcing carbon black are
(A) said belt ply and said carcass ply components,
(B) said belt ply and said outer sidewall layer components,
(C) said carcass ply and said outer sidewall layer components,
(D) said outer sidewall layer and said apex components,
(E) said apex and said chafer components,
(F) said belt ply, said carcass ply and said outer sidewall layer components,
(G) said carcass ply, said apex and said outer sidewall layer components,
(H) said outer sidewall layer, said apex and said chafer components, or
(I) said carcass ply, said belt ply, said outer sidewall layer, said apex and said chafer components.

6. The tire of at least one of the previous claims, wherein said at least three of said additional tire components comprise rubber compositions which contain from 20 to a maximum of 50 phr of rubber reinforcing filler comprising from zero to a maximum of 30 phr of rubber reinforcing carbon black and from zero to a maximum of 50 phr of silica, preferably precipitated silica.

7. The tire of at least one of the previous claims, wherein said additional tire components comprise five or six of said additional tire components.

8. The tire of at least one of the previous claims, wherein said sidewall rubber layer component comprises a rubber composition which contains from zero to a maximum of 30 phr of rubber reinforcing carbon black and contains at least one rubber strip extending across the radial width of said outer sidewall rubber layer, wherein said rubber strip is exclusive of the outer, visible surface of said sidewall rubber layer, wherein rubber strip provides a path of least electrical resistance across the radial width of said sidewall rubber layer and wherein the rubber composition of said rubber strip contains a minimum of 50 phr of rubber reinforcing carbon black.

9. The tire of at least one of the previous claims, wherein a path of least electrical resistance is provided through or around at least one of said outer tread cap rubber layer and at least two of said tire components of rubber composition(s) which contain from zero to the maximum of 30 phr of rubber reinforcing carbon black by a rubber composition which contains at least 50 phr of rubber reinforcing carbon black, in order to provide said path of least electrical resistance through or around said tire component to a running surface of the tire tread cap layer.
